# EUROPEAN PATENT APPLICATION

(11) **EP 4 755 233 A1**
(43) Date of publication of application: **10.06.2026**
(21) Application number: 24849516.0
(22) Date of filing: 26.07.2024
(51) Int. Cl.: A24F 40/95, A24F 40/51, A24F 40/53, A24F 40/57, A24F 40/46, A24F 40/65, A24F 40/40, A24F 40/50, A24F 40/90, A24F 40/05

(54) **BATTERY COUPLING STRUCTURE AND AEROSOL GENERATION DEVICE COMPRISING SAME**

(30) Priority: 31.07.2023 KR 20230099858; 16.10.2023 KR 20230137982
(71) Applicant: KT&G Corporation, Daedeok-gu Daejeon 34337 (KR)
(72) Inventor: SHIN, Youn Ji, Seoul 05022 (KR); KIM, Tae Hun, Yongin-si, Gyeonggi-do 16925 (KR); PARK, Ju Eon, Seongnam-si, Gyeonggi-do 13597 (KR); LIM, Hun Il, Seoul 05555 (KR); JUNG, Hyung Jin, Seoul 06993 (KR)
(74) Representative: AWA Sweden AB
(86) International application number: PCT/KR2024/010943
(87) International publication number: WO 2025/028947

(57) **Abstract**

A battery coupling structure includes a battery for supplying power, a housing including a coupling space for accommodating the battery, a plurality of receiving terminals inserted into a portion of the housing to receive power from the battery, a pressing member for pressing the battery accommodated in the coupling space so that the battery contacts each of the plurality of receiving terminals, and an elastic member for supporting the pressing member and moving the pressing member in a direction crossing an insertion direction of the battery, wherein the plurality of receiving terminals sequentially contact the battery during insertion of the battery into the coupling space.

## Description

### Technical Field

Various embodiments of the present disclosure relate to a battery coupling structure and an aerosol-generating device including the battery coupling structure, and more particularly, to a battery coupling structure having a structure capable of stably coupling a battery to a housing and an aerosol-generating device including the battery coupling structure.

### Background Art

Recently, the demand for alternative methods for overcoming the shortcomings of general cigarettes has increased. For example, there is an increasing demand for a system for generating aerosols by heating a cigarette or an aerosol-generating material by using an aerosol-generating device, rather than by burning cigarettes. Accordingly, research on heating-type aerosol-generating devices has been actively conducted.

As interest in environmental issues increases worldwide, environmental friendliness and safety are demanded throughout the entire life cycle of batteries, from production to recycling. Accordingly, in the field of aerosol-generating devices, research on detachable batteries has been newly conducted while promoting the development of related technologies, such as reuse and recycling of batteries.

### Disclosure of Invention

### Technical Problem

Embodiments provide a battery coupling structure having a structure capable of stably coupling a battery to a housing and an aerosol-generating device including the battery coupling structure.

The technical problems of the present disclosure are not limited to the above-described description, and other technical problems may be clearly understood by one of ordinary skill in the art from the embodiments to be described hereinafter.

### Solution to Problem

A battery coupling structure according to an embodiment may include a battery for supplying power, a housing including a coupling space for accommodating the battery, a plurality of receiving terminals inserted into a portion of the housing to receive power from the battery, a pressing member for pressing the battery accommodated in the coupling space so that the battery contacts each of the plurality of receiving terminals, and an elastic member for supporting the pressing member and moving the pressing member in a direction crossing an insertion direction of the battery, wherein the plurality of receiving terminals may sequentially contact the battery during a process in which the battery is inserted into the coupling space.

### Advantageous Effects of Invention

According to a battery coupling structure and an aerosol-generating device including the battery coupling structure according to embodiments, a battery may be stably coupled to a housing by simply inserting the battery into the housing.

Effects of the present disclosure are not limited to the above effects, and effects that are not mentioned could be clearly understood by one of ordinary skill in the art from the present specification and the attached drawings.

### Brief Description of Drawings

FIGS. 1A to 1C are diagrams showing examples of an aerosol-generating device according to an embodiment.
FIG. 2 is a perspective view schematically showing an aerosol-generating device according to an embodiment of the present disclosure.
FIG. 3 is a cross-sectional view showing a battery coupling structure according to an embodiment of the present disclosure.
FIGS. 4A to 4G are diagrams sequentially showing a process of inserting a battery applicable to the battery coupling structure of FIG. 3 into a coupling space of a housing.
FIG. 5 is a cross-sectional view showing a battery coupling structure according to another embodiment of the present disclosure.
FIG. 6A is a cross-sectional view showing a first state of a battery coupling structure according to another embodiment of the present disclosure.
FIG. 6B is a cross-sectional view showing a second state of the battery coupling structure of FIG. 6A.
FIG. 7 is a cross-sectional view of an aerosol-generating device according to another embodiment of the present disclosure.
FIG. 8 is a block diagram of an aerosol-generating device according to another embodiment of the present disclosure.

### Mode for the Invention

Hereinafter, embodiments will be described in detail with reference to the accompanying drawings, and the same or similar components will be assigned the same reference numerals regardless of the reference numerals in the drawings, and the same descriptions thereof will be omitted.

Terms such as "...unit" and " ...module," are used in the following description in consideration of only ease of drafting of the specification, and thus do not have distinct meanings or roles in themselves.

In the description of embodiments of the disclosure, certain detailed explanations of the related art are omitted when it is deemed that they may unnecessarily obscure the essences of embodiments of the disclosure. In addition, the accompanying drawings are only intended to facilitate understanding of the embodiments described herein, and the spirit of the disclosure is not limited by the accompanying drawings and should be understood to include all changes, equivalents or alternatives included in the spirit and scope of the disclosure.

While such terms as "first", "second", etc., may be used to describe various components, such components must not be limited to the above terms. The above terms are used only to distinguish one component from another.

When an element is referred to as being "connected to" or "coupled to" another element, it may be directly connected or coupled to the other element or intervening elements may be present. In contrast, when an element is referred to as being "directly connected to" or "directly coupled to" another element, there are no intervening elements present.

An expression used in the singular encompasses the expression of the plural, unless it has a clearly different meaning in the context.

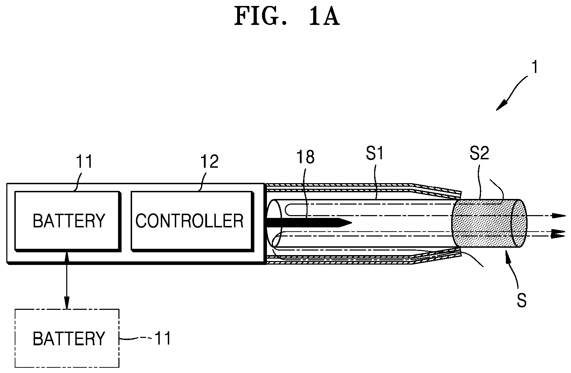

FIGS. 1A to 1C are diagrams showing examples of an aerosol-generating device according to an embodiment.

FIGS. 1A to 1C illustrate examples in which a cigarette (hereinafter, this term may be used interchangeably with the terms 'aerosol-generating article' or 'stick') is inserted into an aerosol-generating device.

Referring to FIGS. 1A to 1C, an aerosol-generating device 1 may include a battery 11, a controller 12, a heater 18, and a cartridge 19.

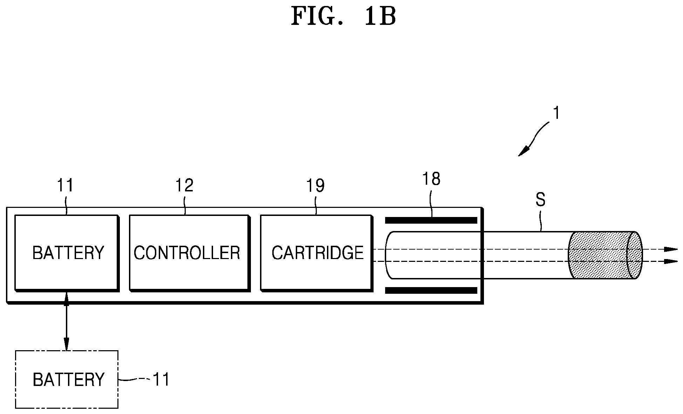

Referring to FIG. 1A, the aerosol-generating device 1 includes the battery 11, the controller 12, and the heater 18. Referring to FIG. 1B, the aerosol-generating device 1 further includes the cartridge 19. An aerosol-generating article S may be inserted into an internal space of the aerosol-generating device 1.

When the aerosol-generating article S is inserted into the aerosol-generating device 1, the aerosol-generating device 1 may generate an aerosol by operating the heater 18 and/or the cartridge 19. The aerosol generated by the heater 18 and/or the cartridge 19 passes through the aerosol-generating article S and is delivered to a user. If necessary, the aerosol-generating device 1 may heat the heater 18 even when the aerosol-generating article S is not inserted into the aerosol-generating device 1.

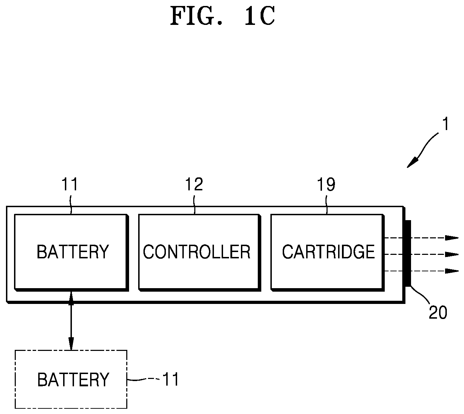

The heater 18 may be omitted. Referring to FIG. 1C, the aerosol-generating device 1 includes the battery 11, the controller 12, and the cartridge 19. The aerosol-generating device 1 of FIG. 1C does not have a space into which the aerosol-generating article S may be inserted, and the heater 18 for heating the aerosol-generating article S is not arranged in the aerosol-generating device 1 of FIG. 1C.

In the aerosol-generating device 1 of FIGS. 1A to 1C, components related to the present embodiment are illustrated. Therefore, it may be understood by those skilled in the art related to the present embodiment that, in addition to the components illustrated in FIGS. 1A to 1C, other general components may be further included in the aerosol-generating device 1.

In FIGS. 1A to 1C, components of the aerosol-generating device 1 of are shown as being arranged in a row. However, the internal structure of the aerosol-generating device 1 is not limited to that illustrated in FIGS. 1A to 1C. For example, the cartridge 19 and the heater 18 may be arranged in parallel. In other words, depending on the design of the aerosol-generating device 1, the arrangement of the battery 11, the controller 12, the heater 18, and the cartridge 19 may be changed.

The battery 11 supplies power used to operate the aerosol-generating device 1. For example, the battery 11 may supply power so that the heater 18 or the cartridge 19 may be heated, and may supply power required for the controller 12 to operate. In addition, the battery 11 may supply power required for a display, a sensor, a motor, etc. installed in the aerosol-generating device 1 to operate.

The battery 11 may be a removable type (detachable or separable) power source. The battery 11 includes an electrical contact portion, and when the battery 11 is mounted in the aerosol-generating device 1, the electrical contact portion of the battery 11 may be implemented to be electrically connected to an electrical contact portion provided in the aerosol-generating device 1 to supply power to the aerosol-generating device 1. As another example, the battery 11 may include a charging coil for supplying power to the aerosol-generating device 1 in a wireless charging manner instead of a separate electrical contact portion. That is, the power supply method of the battery 11 may vary, and the electrical connection method of the battery 11 and the aerosol-generating device 1 may vary depending on the power supply method supported by the battery 11.

The detachable battery 11 may include a charger interface that may be connected to an external charger. Power for charging the detachable battery 11 may be provided to the battery 11 through the charger interface. The battery 11 may be charged by the external charger while being coupled to the aerosol-generating device 1 or while being separated from the aerosol-generating device 1.

The controller 12 controls all operations of the aerosol-generating device 1. Specifically, the controller 12 controls the operations of the battery 11, the heater 18, and the cartridge 19, as well as other components included in the aerosol-generating device 1. In addition, the controller 12 may check the status of each of the components of the aerosol-generating device 1 to determine whether the aerosol-generating device 1 is in an operable state.

The controller 12 includes at least one processor. The processor may be implemented as an array of a plurality of logic gates, or may be implemented as a combination of a general-purpose microprocessor and a memory storing a program that may be executed by the microprocessor. It will also be understood by those skilled in the art that the processor may be implemented in other forms of hardware.

The heater 18 may be heated by power supplied from the battery 11. For example, when a cigarette is inserted into the aerosol-generating device 1, the heater 18 may be located outside the cigarette. Therefore, the heated heater 18 may increase the temperature of an aerosol-generating material inside the cigarette.

The heater 18 may be an electrical resistance heater. For example, the heater 18 may include an electrically conductive track, and the heater 18 may be heated as current flows through the electrically conductive track. However, the heater 18 is not limited to the above-described example and may be applied without limitation as long as it may be heated to a desired temperature. Here, the desired temperature may be preset in the aerosol-generating device 1, or may be set to a desired temperature by the user.

Meanwhile, as another example, the heater 18 may be an induction heating heater. Specifically, the aerosol-generating device 1 may include an induction coil (not shown) surrounding the heater 18. When power is supplied to the induction coil by the battery 11, the induction coil may heat the heater 18. The heater 18 may be a susceptor and may be heated by a magnetic field generated by an AC current flowing through the induction coil. The magnetic field may pass through the heater 18 and generate an eddy current within the heater 18. The current may generate heat in the heater 18.

Meanwhile, the cigarette may include a susceptor that may be heated by an induction heating heater. The susceptor may be included inside the cigarette, and the susceptor inside the cigarette may be heated by a magnetic field generated by an AC current flowing through the induction coil.

In FIGS. 1A and 1B, the heater 18 is illustrated as being arranged outside the aerosol-generating article S, but is not limited thereto. The heater 18 may include a tubular heating element, a plate-shaped heating element, a needle-shaped heating element, or a rod-shaped heating element, and may heat the interior or exterior of the aerosol-generating article S depending on the shape of the heating element.

In addition, a plurality of heaters 18 may be arranged in the aerosol-generating device 1. In this case, the plurality of heaters 18 may be arranged to be inserted into the interior of the aerosol-generating article S or may be arranged on the exterior of the aerosol-generating article S. In addition, some of the plurality of heaters 18 may be arranged to be inserted into the interior of the aerosol-generating article S, and the rest may be arranged on the exterior of the aerosol-generating article S. In addition, the shape of the heater 18 is not limited to the shape shown in FIGS. 1A and 1B, and may be manufactured in various shapes.

The cartridge 19 may heat a liquid composition to generate an aerosol, and the generated aerosol may be delivered to the user by passing through the aerosol-generating article S.

In other words, the aerosol generated by the cartridge 19 may move along an airflow passage of the aerosol-generating device 1. In FIGS. 1A and 1B, the aerosol moving along the airflow passage may be delivered to the user through the aerosol-generating article S. In FIG. 1C, the aerosol moving along the airflow passage may be delivered to the user through a mouthpiece 20.

The cartridge 19 may include, but is not limited to, a liquid storage, a liquid delivery element, and a cartridge heater. For example, the liquid storage, the liquid delivery element, and the cartridge heater may be included in the aerosol-generating device 1 as independent modules.

The liquid storage may store a liquid composition. For example, the liquid composition may be a liquid including a tobacco-containing material including a volatile tobacco flavoring component, or a liquid including a non-tobacco material. The liquid storage may be manufactured to be detachable/attachable from/to the cartridge 19, or may be manufactured integrally with the cartridge 19.

For example, the liquid composition may include water, a solvent, ethanol, a plant extract, flavoring, a flavoring agent, or a vitamin mixture. The flavoring may include, but is not limited to, menthol, peppermint, spearmint oil, various fruit flavoring ingredients, etc. The flavoring agent may include ingredients that may provide various flavors or tastes to the user. The vitamin mixture may include, but is not limited to, a mixture of at least one of vitamin A, vitamin B, vitamin C, and vitamin E. In addition, the liquid composition may include an aerosol-forming agent, such as glycerin and propylene glycol.

The liquid delivery element may deliver the liquid composition of the liquid storage to the heating element. For example, the liquid delivery element may be, but is not limited to, a wick such as cotton fiber, ceramic fiber, glass fiber, or porous ceramic.

The cartridge heater is an element for heating the liquid composition delivered by the liquid delivery element. The cartridge heater may be, but is not limited to, a metal heating wire, a metal heating plate, a ceramic heater, or the like, and may include various types for generating an aerosol from an aerosol-generating material.

As an example, the cartridge heater may be composed of a conductive filament such as a nichrome wire and may have a structure that is wound around the liquid delivery element. The cartridge heater may be heated by a current supply, and may transfer heat to the liquid composition in contact with the cartridge heater, thereby heating the liquid composition. As a result, an aerosol may be generated.

As another example, the cartridge heater may be composed of a susceptor material that is heated by an induced magnetic field, and may be heated by an induced magnetic field generated by an induction coil that is arranged separately from the heating element.

As another example, the cartridge heater may be an ultrasonic vibrator that generates an aerosol from an aerosol-generating material by using an ultrasonic vibration method. The ultrasonic vibration method may refer to a method of generating an aerosol by atomizing an aerosol-generating material by ultrasonic vibration generated by the vibrator.

The cartridge heater may be permanently or reversibly attached to the liquid delivery element by applying, spraying, depositing, plating, immersing, painting, printing, 3D printing, using a device, etc., as well as coupling according to structural features, such as being wound on the liquid delivery element, and may be arranged on the liquid delivery element. In addition, the cartridge heater may be arranged on the liquid delivery element by sintering the cartridge heater together during the process of manufacturing the liquid delivery element. However, the arrangement of the cartridge heater is not limited to the examples described above, and may include various methods in which the cartridge heater may be arranged on the liquid delivery element while maintaining the function of the cartridge heater.

The cartridge heater may be referred to as a cartomizer or an atomizer, but is not limited thereto.

The cartridge 19 may be inserted into and detached from the main body of the aerosol-generating device 1 or the aerosol-generating device 1. When the aerosol-generating material stored in the cartridge 19 is completely consumed, the aerosol-generating material may be newly replenished in the cartridge 19 or the cartridge 19 may be replaced with another cartridge 19 in which the aerosol-generating material is stored.

Meanwhile, the aerosol-generating device 1 may further include general-purpose components in addition to the battery 11, the controller 12, the heater 18, and the cartridge 19. For example, the aerosol-generating device 1 may include a display capable of outputting visual information and/or a motor for outputting tactile information. In addition, the aerosol-generating device 1 may include at least one sensor (a puff detection sensor, a temperature detection sensor, a cigarette insertion detection sensor, etc.). In addition, the aerosol-generating device 1 may have a structure in which outside air may be introduced or internal gas may be discharged even when the aerosol-generating article S is inserted into the aerosol-generating device 1.

Although not shown in FIGS. 1A to 1C, the aerosol-generating device 1 may also be configured as a system with a separate cradle. For example, the cradle may be used to charge the battery 11 of the aerosol-generating device 1. Alternatively, the heater 18 may be heated while the cradle and the aerosol-generating device 1 are coupled to each other.

The aerosol-generating article S may be similar to a typical combustion-type cigarette. For example, the aerosol-generating article S may be divided into a first part S1 including an aerosol-generating material and a second part S2 including a filter, etc. The first part S1 may be referred to as a 'medium part' hereinafter.

The second part S2 of the aerosol-generating article S may also include an aerosol-generating material. For example, an aerosol-generating material made in the form of granules or capsules may be inserted into the second part S2.

The entire first part S1 may be inserted into the interior of the aerosol-generating device 1, and the second part S2 may be exposed to the outside. Alternatively, only a portion of the first part S1 may be inserted into the interior of the aerosol-generating device 1, or the entire first part S1 and a portion of the second part S2 may be inserted into the interior of the aerosol-generating device 1. The user may inhale the aerosol while holding the second part S2 in his/her mouth. In this case, the aerosol is generated as outside air passes through the first part S1, and the generated aerosol passes through the second part S2 and is delivered to the user's mouth.

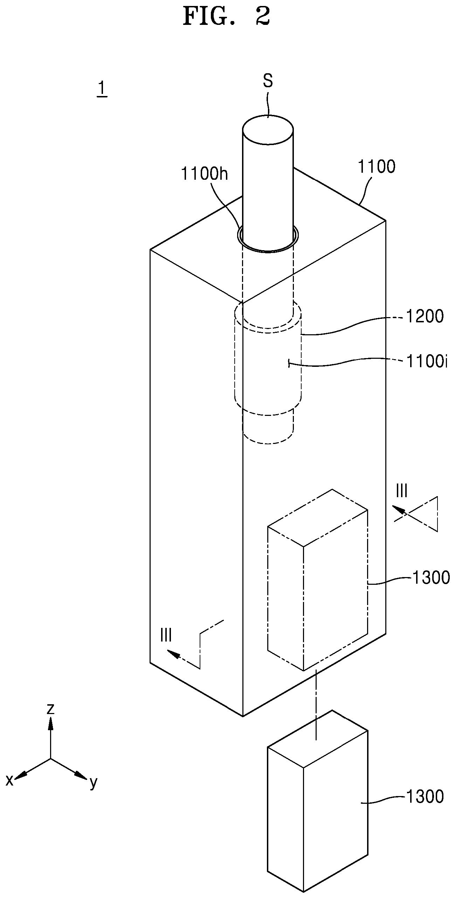

FIG. 2 is a perspective view schematically showing an aerosol-generating device according to an embodiment of the present disclosure.

Referring to FIG. 2, an aerosol-generating device 1 according to an embodiment may include a body 1100, a heater 1200, and a battery 1300.

The body 1100 may form the overall appearance of the aerosol-generating device 1 and may include an internal space in which components of the aerosol-generating device 1 may be arranged. In FIG. 2, only an embodiment in which the cross-section of the body 1100 has a square pillar shape is illustrated, but the shape of the body 1100 is not limited thereto, and the body 1100 may be formed to have a cylindrical shape or a polygonal pillar shape.

The body 1100 may include an opening 1100h through which an aerosol-generating article S may be inserted into the interior of the body 1100. At least a portion of the aerosol-generating article S may be inserted or accommodated inside the body 1100 through the opening 1100h.

The body 1100 may include an accommodation space 1100i for accommodating the aerosol-generating article S therein. The accommodation space 1100i may be formed in an upper portion of the body 1100. The accommodation space 1100i may be opened upward and connected to the opening 1100h.

The accommodation space 1100i may have a cylindrical shape that vertically extends. At least a portion of the aerosol-generating article S may be accommodated inside the body 1100 through the opening 1100h on the upper side of the accommodation space 1100i. In this case, the depth of the accommodation space 1100i for accommodating the aerosol-generating article S may correspond to the length of an area containing an aerosol-generating material or medium in the aerosol-generating article S.

The heater 1200 (e.g., the heater 18 of FIGS. 1A and 1B) may generate an aerosol from the aerosol-generating article S accommodated in the accommodation space 1100i. The heater 1200 may vertically extend along the accommodation space 1100i.

According to an embodiment, the heater 1200 may surround at least a portion of the accommodation space 1100i. As an example, the heater 1200 may be a cylindrical electrical resistance heater that surrounds at least a portion of the accommodation space 1100i. As another example, the heater 1200 may include a cylindrical susceptor surrounding at least a portion of the accommodation space 1100i and an induction coil surrounding the susceptor. The heater 1200 may heat the exterior of the aerosol-generating article S accommodated in the accommodation space 1100i. However, the embodiment is not limited to the shape and arrangement of the heater 1200. In another embodiment, the heater 1200 may be inserted into the interior of the aerosol-generating article S.

At least one area of the aerosol-generating article S accommodated in the accommodation space 1100i may be heated by the heater 1200, and vaporized particles generated by the heating of the aerosol-generating article S may be mixed with air introduced into the internal space of the body 1100 through an air inlet (e.g., the opening 1100h) formed in one area of the body 1100 and thus an aerosol may be generated.

Meanwhile, the heater 1200 may be the cartridge heater of FIGS. 1B and 1C. In this case, the aerosol-generating article S may be the cartridge 19 of FIGS. 1B and 1C, rather than a cigarette or a stick.

The aerosol-generating device 1 according to an embodiment may include a battery 1300 that supplies power used to operate the aerosol-generating device 1. In this case, the battery 1300 may be the battery 11 of FIGS. 1A to 1C.

Referring to FIG. 2, the battery 1300 may be detachably coupled to the body 1100. For example, the battery 1300 may be moved in the +z direction from a position spaced apart from the body 1100 in the -z direction and inserted into an area of the body 1100. However, the embodiment is not limited to an insertion direction of the battery 1300.

Hereinafter, the 'battery coupling structure', which is a structure in which the battery 1300 is coupled to the body 1100, will be described in detail. In this case, in order to describe the battery coupling structure, a portion of the body 1100 into which the battery 1300 is inserted is referred to as a 'housing'.

The battery coupling structure including the housing and the battery is a component of the aerosol-generating device 1, but those skilled in the art may easily understand that the battery coupling structure to be described below is not limited to the aerosol-generating device and may be applied to various devices to which a detachable portable battery may be applied.

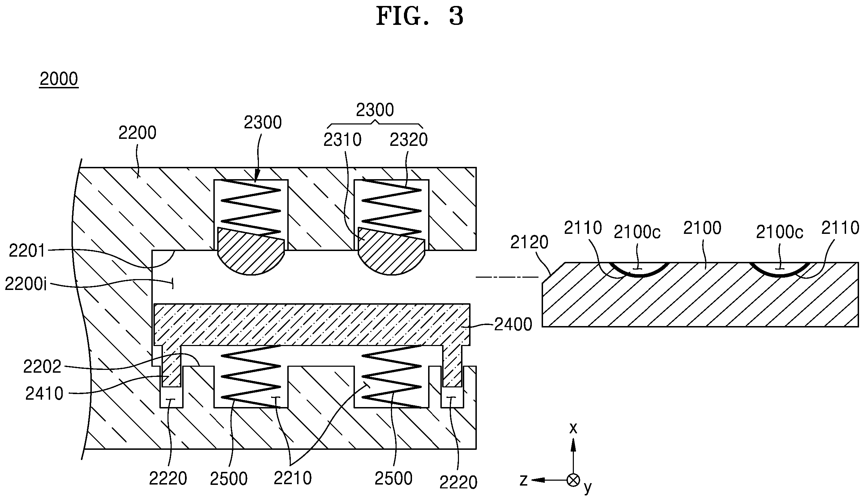

FIG. 3 is a cross-sectional view showing a battery coupling structure according to an embodiment of the present disclosure. Specifically, FIG. 3 is a cross-sectional view of a portion of the aerosol-generating device of FIG. 2 taken along line III-III.

Referring to FIG. 3, a battery coupling structure 2000 according to an embodiment may include a battery 2100, a housing 2200, a receiving terminal 2300, a pressing member 2400, and an elastic member 2500.

The battery 2100 may be identical to or similar to the battery 11 of FIGS. 1A to 1C or the battery 1300 of FIG. 2. The battery 2100 may have a polygonal columnar shape as illustrated in FIG. 3, but is not limited thereto and may have various shapes, such as a cylindrical shape. In addition, although the battery 2100 is illustrated in FIG. 3 as being relatively short in the x-axis direction and relatively long in the z-axis direction, the dimensions of the battery 2100 are not limited to those illustrated in FIG. 3.

The housing 2200 forms the overall appearance of the battery coupling structure 2000 and may include a coupling space 2200i for accommodating the battery 2100 and other components. For example, in the coupling space 2200i of the housing 2200, not only the battery 2100 but also the receiving terminal 2300, the pressing member 2400, and the elastic member 2500 may be arranged.

The coupling space 2200i of the housing 2200 may be open in the -z direction so that the detachable battery 2100 may be inserted into the coupling space 2200i. The coupling space 2200i may have a shape corresponding to the shape of the battery 2100. For example, the coupling space 2200i may be formed to be relatively thin in the x-axis direction and relatively long in the z-axis direction.

The receiving terminal 2300 is configured to be inserted into a portion of the housing 2200 and to receive power from the battery 2100. The receiving terminal 2300 may be supplied with power by coming into contact with a portion of the battery 2100. Specifically, the battery 2100 may include a supply terminal 2110 that is in contact with the receiving terminal 2300. As the supply terminal 2110 and the receiving terminal 2300 come into contact with each other, power may be supplied from the battery 2100 to a component arranged inside the housing 2200.

A plurality of receiving terminals 2300 may be arranged. As illustrated in FIG. 3, two receiving terminals 2300 are arranged, but the embodiment is not limited to the number of receiving terminals 2300. The number of supply terminals 2110 may be the same as the number of receiving terminals 2300.

Each of the receiving terminals 2300 may include a contact portion 2310 having at least a portion convexly protruding into the coupling space 2200i, and an elastic portion 2320 that supports the contact portion 2310. In a state where there is no separate external force applied to the elastic portion 2320, the elastic portion 2320 may support the contact portion 2310 so that a portion of the contact portion 2310 protrudes into the coupling space 2200i.

In this case, in order for the battery 2100 and the housing 2200 to be firmly coupled to each other, it is necessary for the battery 2100 to be in close contact with one side of the housing 2200 where the receiving terminal 2300 is arranged. To this end, the battery 2100 may include a concave portion 2100c corresponding to the convex shape of the contact portion 2310 protruding into the coupling space 2200i.

The concave portion 2100c of the battery 2100 may have a concave shape in a direction (e.g., x-axis direction) crossing the insertion direction of the battery 2100 on one side of the battery 2100 facing the receiving terminal 2300. The supply terminal 2110 is arranged in the concave portion 2100c, and when the battery 2100 is combined into the coupling space 2200i, the receiving terminal 2300 inserted into the housing 2200, the concave portion 2100c of the battery 2100, and the supply terminal 2110 may be aligned in a direction (e.g., the x-axis direction) crossing the insertion direction of the battery 2100.

The pressing member 2400 is arranged inside the coupling space 2200i and is configured to press the battery 2100 inserted into the coupling space 2200i. The pressing member 2400 may press the battery 2100 accommodated in the coupling space 2200i toward the receiving terminal 2300 or in the direction (e.g., the +x direction) crossing the insertion direction of the battery 2100 so that the battery 2100 comes into contact with the receiving terminal 2300.

In order for the pressing member 2400 to move within the coupling space 2200i without being separated outside the coupling space 2200i, the battery coupling structure 2000 according to an embodiment may include an elastic member 2500 that supports the pressing member 2400.

The elastic member 2500 may support the pressing member 2400 and move the pressing member 2400 in the direction crossing the insertion direction of the battery 2100. By the elastic force applied by the elastic member 2500 to the pressing member 2400, the pressing member 2400 may press the battery 2100 toward the receiving terminal 2300.

A plurality of elastic members 2500 may be arranged, but the embodiment is not limited to the number of elastic members 2500. In this case, the plurality of elastic members 2500 may be aligned in a direction (e.g., the x-axis direction) that crosses each of the plurality of receiving terminals 2300 and the insertion direction of the battery 2100. Accordingly, the plurality of elastic members 2500 may press the pressing member 2400 and the battery 2100 more strongly toward the plurality of receiving terminals 2300.

In order to secure a space for arranging the elastic member 2500 within the coupling space 2200i, the housing 2200 may include an accommodation groove 2210 for accommodating the elastic member 2500. Specifically, when the surface of the housing 2200 on which the receiving terminal 2300 is arranged is referred to as a first surface 2201 and the surface facing the first surface 2201 is referred to as a second surface 2202, the accommodation groove 2210 may be arranged on the second surface 2202. Therefore, even when the pressing member 2400 is pressed toward the second surface 2202 by the battery 2100 while the battery 2100 is inserted into the coupling space 2200i, the elastic member 2500 positioned and compressed in the accommodation groove 2210 may smoothly press the pressing member 2400 toward the first surface 2201 through elastic force.

Referring to FIG. 3, one surface of the pressing member 2400 may come into contact with the battery 2100 inserted into the coupling space 2200i, and the other surface of the pressing member 2400 facing the opposite direction to one surface of the pressing member 2400 may come into contact with the elastic member 2500. Accordingly, the receiving terminal 2300, the battery 2100, the pressing member 2400, and the elastic member 2500 may be aligned in the direction (e.g., the x-axis direction) crossing the insertion direction of the battery 2100 within the coupling space 2200i.

Meanwhile, in order for the pressing member 2400 to press the battery 2100 only in the direction crossing the insertion direction of the battery 2100, the pressing member 2400 also needs to move only in the direction crossing the insertion direction of the battery 2100. To this end, the pressing member 2400 may include a guide portion 2410 protruding in the direction crossing the insertion direction of the battery 2100. Referring to FIG. 3, the guide portion 2410 may protrude in an opposite direction (e.g., -x direction) to a direction toward the receiving terminal 2300.

Corresponding to the guide portion 2410, the housing 2200 may include a guide groove 2220 that accommodates the guide portion 2410 and guides the movement of the pressing member 2400. At least a portion of the guide portion 2410 may be accommodated in the guide groove 2220 and move in a direction (e.g., the x-axis direction) in which the guide groove 2220 is open. In this case, in order to prevent the pressing member 2400 from being separated from the coupling space 2200i, at least a portion of the guide portion 2410 may always be accommodated in the guide groove 2220.

Referring to FIG. 3, the guide portion 2410 protrudes in the direction crossing the insertion direction of the battery 2100 from both ends of the pressing member 2400, and two guide grooves 2220 are arranged at positions corresponding to the positions of the guide portions 2410, but the embodiment is not limited to the positions and numbers of the guide portions 2410 and the guide grooves 2220.

In a state where no separate external force is applied to the elastic member 2500, the distance between the pressing member 2400 supported by the elastic member 2500 and the first surface 2201 of the housing 2200 may be less than the thickness of the battery in the x-axis direction. Because the battery 2100 is inserted between the pressing member 2400 and the first surface 2201 of the housing 2200, how the battery 2100 may be inserted into the coupling space 2200i may be a problem.

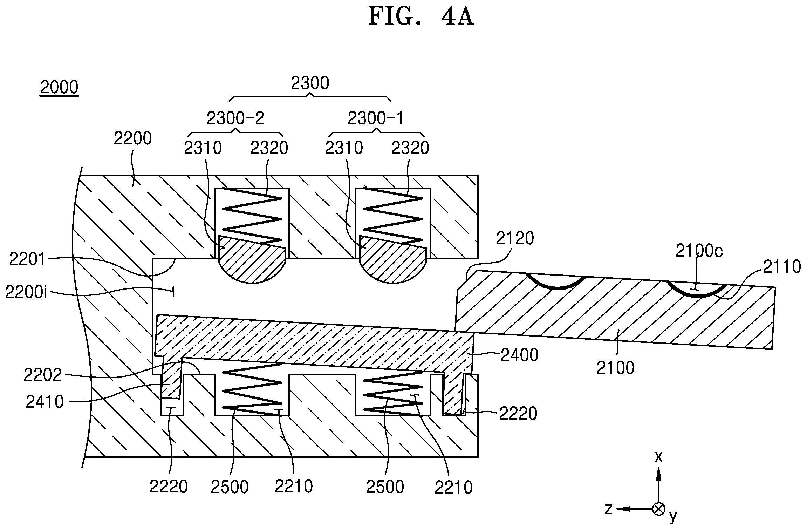

Hereinafter, with reference to FIGS. 4A to 4G, the process of inserting the battery 2100 into the coupling space 2200i will be described in detail.

FIGS. 4A to 4G are diagrams showing, in sequence, the process of inserting a battery applicable to the battery coupling structure of FIG. 3 into a coupling space of a housing.

At least one of components of a battery coupling structure 2000 illustrated in FIGS. 4A to 4G may be identical or similar to at least one of the components of the battery coupling structure 2000 illustrated in FIG. 3, and duplicate descriptions thereof are omitted below.

FIG. 4A shows a state where the battery 2100 starts to be inserted into the coupling space 2200i in the battery coupling structure 2000 of FIG. 3.

Referring to FIG. 4A, it is assumed that a direction in which the battery 2100 is inserted into the coupling space 2200i is the z-axis direction of the coordinate axis. In this case, the distance between the pressing member 2400 and the first surface 2201 of the housing 2200 is less than the thickness of the battery 2100 in the x-axis direction, and thus, one end of the battery 2100 presses one end of the pressing member 2400 so that at least a portion of the pressing member 2400 has to move in the -x direction so that the battery 2100 may be inserted into the coupling space 2200i. In this case, the elastic member 2500 arranged close to the entrance of the coupling space 2200i may be compressed.

The pressing member 2400 pressed in the -x direction by the battery 2100 may move until the guide portion 2410 contacts the bottom surface or side surface of the guide groove 2220 or the pressing member 2400 contacts the second surface 2202 of the housing 2200. The movement of the pressing member 2400 due to the pressing of the battery 2100 may secure a space sufficient for a portion of the battery 2100 to be inserted into the coupling space 2200i.

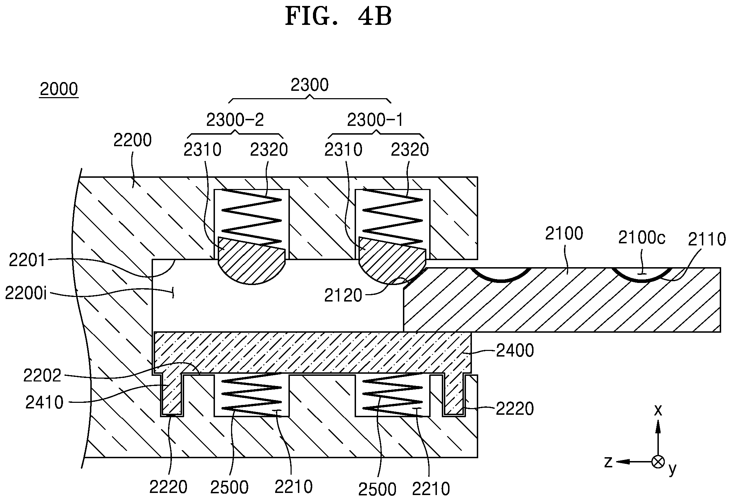

FIG. 4B shows a state in which the battery 2100 is further inserted into the interior of the coupling space 2200i from the position thereof in FIG. 4A, and thus, one end of the battery 2100 contacts a first receiving terminal 2300-1.

Referring to FIG. 4B, as the battery 2100 is further inserted into the coupling space 2200i, not only a portion of the pressing member 2400 but also another portion thereof may be pressed in the -x direction by the battery 2100 and may move in the -x direction. In this case, the elastic member 2500 positioned far from the entrance of the coupling space 2200i may also be compressed. That is, in the process of inserting the battery 2100 into the coupling space 2200i, the plurality of elastic members 2500 may be sequentially compressed from the side close to the entrance of the coupling space 2200i.

Similarly, in the process of inserting the battery 2100 into the coupling space 2200i, the plurality of receiving terminals 2300 may sequentially come into contact with the battery 2100 from receiving terminals 2300 arranged on the side close to the entrance of the coupling space 2200i. As illustrated in FIG. 4B, the battery 2100 moving in a direction (e.g., +z direction) toward the interior of the coupling space 2200i may come into contact with the first receiving terminal 2300-1.

In this case, in order for the battery 2100 to move further in the +z direction past the first receiving terminal 2300-1, the first receiving terminal 2300-1 has to be pressed in a direction (e.g., x-axis direction) that crosses the insertion direction of the battery 2100.

To this end, the battery 2100 may have an inclined surface 2120 that comes into contact with the receiving terminal 2300 while being inserted into the coupling space 2200i. Because the contact portion 2310 of the receiving terminal 2300 has a convex shape toward the coupling space 2200i, when the inclined surface 2120 of the battery 2100 and the contact portion 2310 come into contact with each other, the contact portion 2310 may move in the x-axis direction as the battery 2100 progresses in the z-axis direction.

Because a portion of the contact portion 2310 comes into contact with the inclined surface 2120 of the battery 2100 and the other portion of the contact portion 2310 is supported by the elastic portion 2320, when the contact portion 2310 is pressed in the +x direction, the elastic portion 2320 may also be compressed in the +x direction.

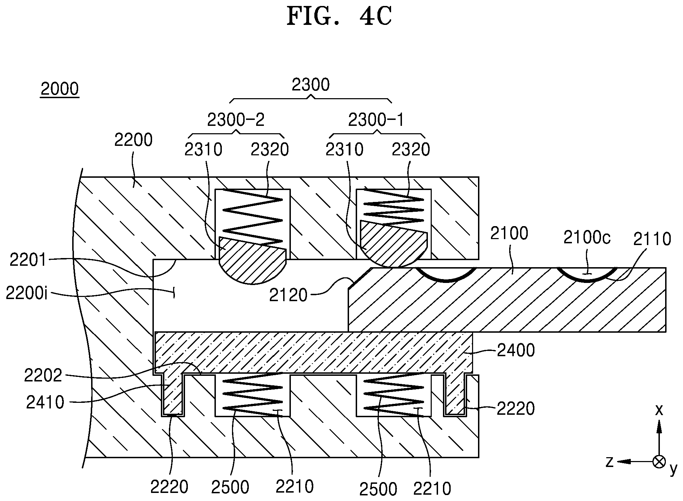

FIG. 4C shows a state in which the battery 2100 is further inserted into the interior of the coupling space 2200i from the position thereof in FIG. 4B and the battery 2100 pushes the first receiving terminal 2300-1 toward the first surface 2201 and passes by.

Referring to FIG. 4C, the elastic portion 2320 compressed in the +x direction may press the contact portion 2310 in the -x direction. However, the degree to which the elastic portion 2320 presses the contact portion 2310 may be such that the user may insert the battery 2100 into the interior of the coupling space 2200i without any problem.

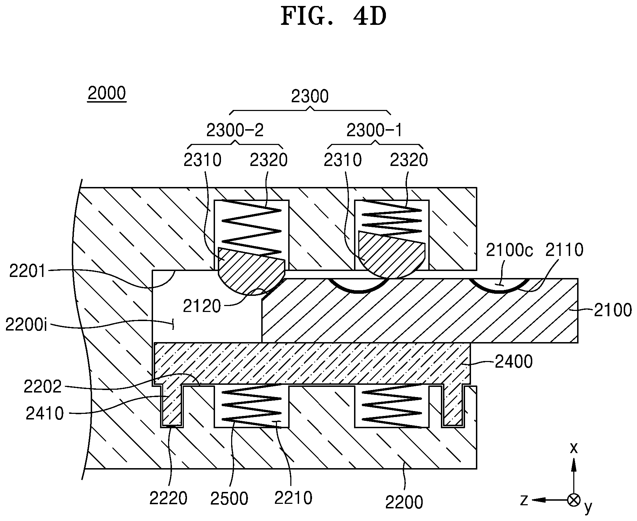

FIG. 4D shows a state in which the battery 2100 is further inserted into the interior of the coupling space 2200i from the position thereof in FIG. 4C, and thus, the inclined surface 2120 of the battery 2100 comes into contact with a second receiving terminal 2300-2.

Referring to FIG. 4D, during the process in which the battery 2100 is inserted into the coupling space 2200i, the battery 2100 that comes into contact with the first receiving terminal 2300-1 may move further in the direction (e.g., the +z direction) toward the interior of the coupling space 2200i and come into contact with the second receiving terminal 2300-2.

While the inclined surface 2120 of the battery 2100 comes into contact with the second receiving terminal 2300-2 and is pressed in the direction (e.g., the x-axis direction) crossing the insertion direction of the battery 2100, the battery 2100 may advance further in the forward direction (e.g., the +z direction).

Meanwhile, when the battery 2100 moves from the position thereof in FIG. 4C to the position thereof in FIG. 4D, the concave portion 2100c of the battery 2100 may pass the contact portion 2310 of the first receiving terminal 2300-1. The concave portion 2100c of the battery 2100 corresponds geometrically to the convex contact portion 2310, and thus, when the concave portion 2100c passes the contact portion 2310, the contact portion 2310 may move in the -x direction according to the pressing of the elastic portion 2320 and settle on the concave portion 2100c. However, even when the contact portion 2310 settles on the concave portion 2100c, the user may push the battery 2100 into the interior of the coupling space 2200i without any particular problem.

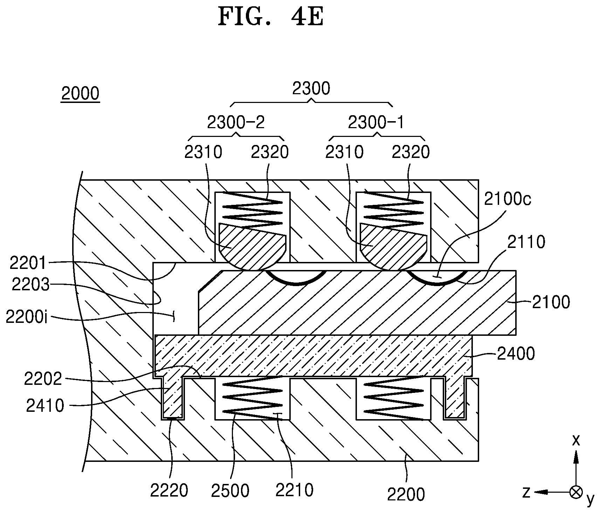

FIG. 4E shows a state in which the battery 2100 is further inserted into the interior of the coupling space 2200i from the position thereof in FIG. 4D and the battery 2100 pushes the second receiving terminal 2300-2 toward the first surface 2201 and passes by.

Referring to FIG. 4E, because the first receiving terminal 2300-1 and the second receiving terminal 2300-2 are compressed in the x-axis direction, the user may press the battery 2100 in the -x direction. However, the degree to which each elastic portion 2320 presses the contact portion 2310 may be such that the user may insert the battery 2100 into the interior of the coupling space 2200i without any problem.

The user may press the battery 2100 to move it in the +z direction until the battery 2100 reaches a bottom surface 2203 of the coupling space 2200i facing a direction (e.g., the z-axis direction) in which the battery 2100 is inserted.

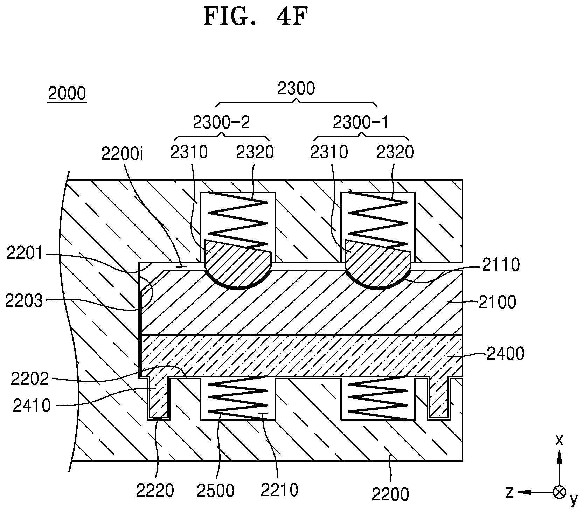

FIG. 4F shows a state in which the battery 2100 is further inserted into the interior of the coupling space 2200i from the position thereof in FIG. 4E and reaches the bottom surface 2203.

Referring to FIG. 4F, when one end of the battery 2100 reaches the bottom surface 2203, the battery 2100 may no longer move in the forward direction. In this case, the contact portion 2310 of the receiving terminal 2300 may move in the x-axis direction by the elastic portion 2320 and settle in a concave portion of the battery 2100.

The supply terminal 2110 of the battery 2100 arranged in the concave portion 2100c and the receiving terminal 2300 inserted into the housing 2200 may come into contact with each other, and thus, power may be supplied from the battery 2100 to internal components of the housing 2200 through the receiving terminal 2300.

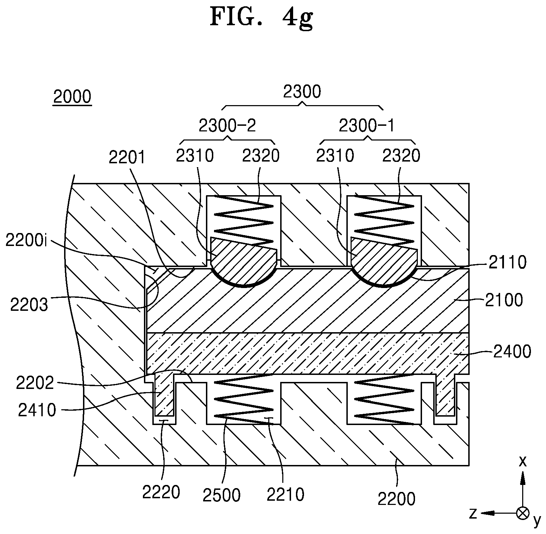

FIG. 4G shows a state in which the coupling of the battery 2100 is completed as the pressing member 2400 presses the battery 2100 at the position thereof in FIG. 4F toward the receiving terminal 2300.

Referring to FIG. 4G, when the user presses the battery 2100 in the -x direction and inserts the battery 2100 in the z-axis direction, the elastic member 2500, which was compressed in the x-axis direction, may be stretched to restore to its original state as the user's pressing on the battery 2100 is released.

As the elastic member 2500 is stretched, the pressing member 2400 may be pressed in the +x direction. The pressing member 2400 may press the battery 2100 in the +x direction or in the direction facing the receiving terminal 2300.

However, as mentioned with respect to FIG. 3, because the distance between the pressing member 2400 and the first surface 2201 before the battery 2100 is inserted is less than the thickness of the battery 2100 in the x-axis direction, the elastic member 2500 may not be restored to its original shape or length.

That is, because the elastic member 2500 is in a compressed state compared to before the battery 2100 is inserted, when the battery 2100 is coupled to the coupling space 2200i, the compressed elastic member 2500 may apply elastic force to the pressing member 2400 to press the battery 2100 toward the receiving terminal 2300 so that the battery 2100 is not separated from the coupling space 2200i.

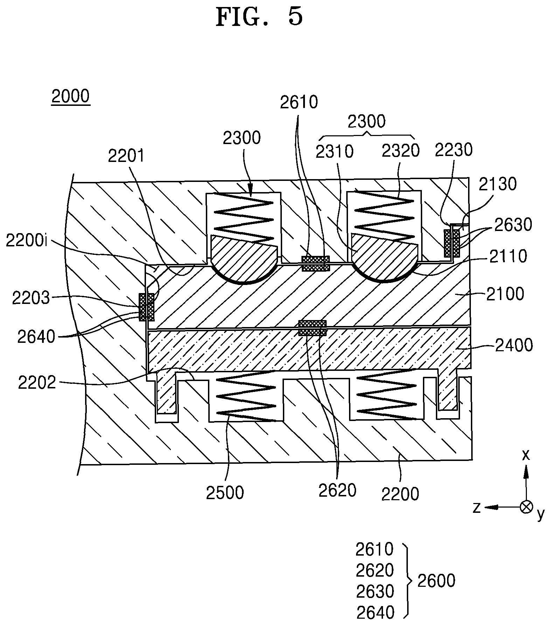

Despite the pressing of the elastic member 2500 and the pressing member 2400, a separate configuration may be required to stably couple the battery 2100 to the coupling space 2200i or stably separate the battery 2100 from the coupling space 2200i. Hereinafter, with reference to FIG. 5, a configuration that may stably couple the battery 2100 to the coupling space 2200i and stably separate the battery 2100 from the coupling space 2200i will be described.

FIG. 5 is a cross-sectional view showing a battery coupling structure according to another embodiment of the present disclosure.

Referring to FIG. 5, a battery coupling structure 2000 according to another embodiment may include a battery 2100, a housing 2200, a receiving terminal 2300, a pressing member 2400, an elastic member 2500, and a magnetic member 2600.

At least one of components of the battery coupling structure 2000 illustrated in FIG. 5 may be identical or similar to at least one of the components of the battery coupling structure 2000 illustrated in FIG. 3, and duplicate descriptions thereof are omitted below.

Unlike the battery 2100 of FIG. 3, the battery 2100 of the battery coupling structure 2000 according to another embodiment may include a protrusion 2130 on one end of the battery 2100 exposed to the outside. When the battery 2100 is separated from the coupling space 2200i while the battery 2100 is coupled to the coupling space 2200i, it may be difficult for the user to manually separate the battery 2100 inserted into the coupling space 2200i.

In this case, the protrusion 2130 may be arranged at one end of the battery 2100 to help the user smoothly separate the battery 2100. The housing 2200 may include a separation groove 2230 to accommodate the protrusion 2130. The user may separate the battery 2100 from the coupling space 2200i by lifting the protrusion 2130 accommodated in the separation groove 2230 and pulling the protrusion 2130 out from the separation groove 2230.

The magnetic member 2600 is a configuration in which two configurations are arranged to be magnetically coupled to each other, and two configurations may form a pair and may be arranged in multiple pairs. Basically, the arrangement of the magnetic member 2600 may prevent the battery 2100 from sliding in the -z direction with respect to the coupling space 2200i, thereby preventing the battery 2100 from being separated from the coupling space 2200i.

A first magnetic member 2610 may be arranged on the battery 2100 and the first surface 2201 of the housing 2200. The first magnetic member 2610 may be arranged around the receiving terminal 2300 so that the battery 2100 is coupled to the housing 2200 in a 'direction in which the pressing member 2400 presses the battery 2100' or a 'direction crossing the insertion direction of the battery 2100'.

Because the receiving terminal 2300 includes an elastic portion 2320, when the battery 2100 is coupled to the coupling space 2200i and the receiving terminal 2300 is compressed, the elastic portion 2320 may apply an elastic force toward the battery 2100. In this case, a pair of first magnetic members 2610 arranged around the receiving terminal 2300 may offset the force exerted by the receiving terminal 2300 on the battery 2100, and thus, the battery 2100 may be stably coupled to the coupling space 2200i.

In addition, the pair of first magnetic members 2610 may prevent the battery 2100 from sliding in the -z direction with respect to the first surface 2201 of the housing 2200, and thus, the battery 2100 may be prevented from being separated from the coupling space 2200i.

A second magnetic member 2620 may be arranged on the battery 2100 and the pressing member 2400. The second magnetic member 2620 may be arranged so that the battery 2100 is coupled to the pressing member 2400 in a 'direction in which the pressing member 2400 presses the battery 2100' or in a 'direction crossing the insertion direction of the battery 2100'.

For example, a pair of second magnetic members 2620 may be arranged to be aligned with a pair of first magnetic members in the direction (e.g., the x-axis direction) crossing the insertion direction of the battery 2100, but the arrangement of the second magnetic members 2620 is not limited to the example described above.

The pair of second magnetic members 2620 may prevent the battery 2100 from sliding in the -z direction with respect to the pressing member 2400, thereby preventing the battery 2100 from being separated from the coupling space 2200i.

A third magnetic member 2630 may be arranged in the protrusion 2130 of the battery 2100 and the separation groove 2230 of the housing 2200. The third magnetic member 2630 may be arranged so that the protrusion 2130 is coupled to the separation groove 2230 in the "insertion direction of the battery 2100'.

A fourth magnetic member 2640 may be arranged on the battery 2100 and the bottom surface 2203 of the housing 2200. The fourth magnetic member 2640 may be arranged so that the battery 2100 is coupled to the bottom surface 2203 of the housing 2200 in a 'direction in which the pressing member 2400 presses the battery 2100' or in a 'direction crossing the insertion direction of the battery 2100'.

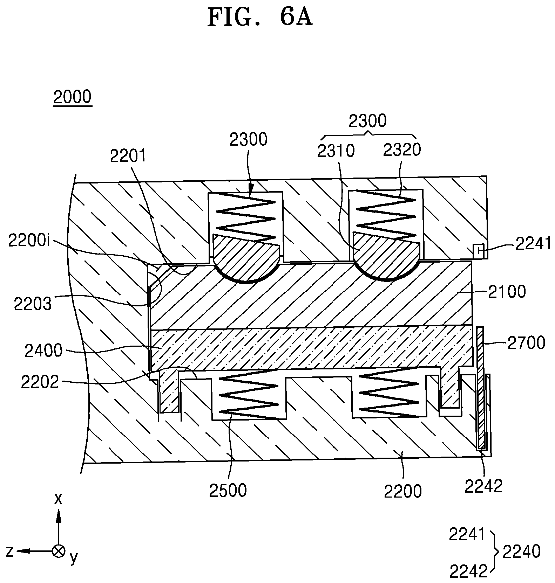

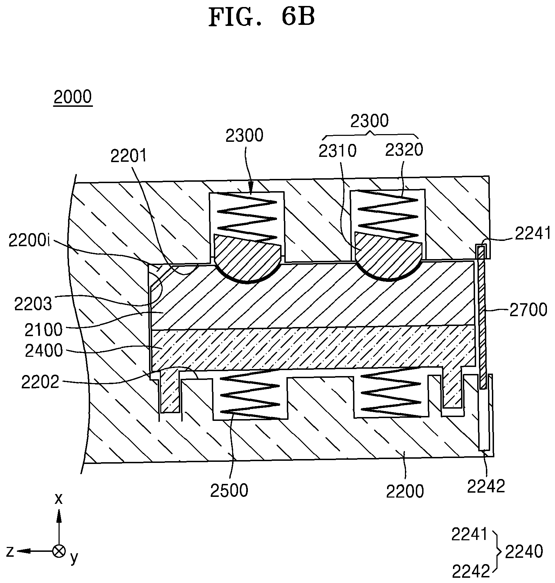

FIG. 6A is a cross-sectional view showing a first state of a battery coupling structure according to another embodiment of the present disclosure. FIG. 6B is a cross-sectional view showing a second state of the battery coupling structure of FIG. 6A.

Referring to FIGS. 6A and 6B, a battery coupling structure 2000 according to another embodiment may include a battery 2100, a housing 2200, a receiving terminal 2300, a pressing member 2400, an elastic member 2500, and a door 2700.

At least one of components of the battery coupling structure 2000 illustrated in FIGS. 6A and 6B may be identical or similar to at least one of the components of the battery coupling structure 2000 illustrated in FIG. 3, and duplicate descriptions thereof are omitted below.

The door 2700 is configured to slide to open and close the coupling space 2200i. The door 2700 may be positioned at the entrance of the coupling space 2200i and exposed to the outside. In this case, the housing 2200 may include a sliding groove 2240 to accommodate at least a portion of the door 2700.

The sliding groove 2240 may include a first sliding groove 2241 positioned on a first surface 2201 and a second sliding groove 2242 positioned on the second surface 2202. Referring to FIGS. 6A and 6B, the second sliding groove 2242 is longer in the x-axis direction than the first sliding groove 2241, but the embodiment is not limited to the drawings.

In FIG. 6A, a first state of the battery coupling structure 2000, in which the door 2700 is arranged at a first position to open the coupling space 2200i, is illustrated. In this case, at least a portion of the door 2700 may be accommodated only in the second sliding groove 2242. The door 2700 may have an appropriate length so as not to interfere with the battery 2100 being inserted between the pressing member 2400 and the first surface 2201.

In FIG. 6B, a second state of the battery coupling structure 2000, in which the door 2700 is arranged at a second position to close the coupling space 2200i, is illustrated. In this case, one end of the door 2700 may be accommodated in the first sliding groove 2241, and the other end of the door 2700 may be accommodated in the second sliding groove 2242 to close the coupling space 2200i.

Although not shown in FIG. 6B, a fastening structure such as a hook may be arranged on one end of the door 2700 accommodated in the first sliding groove 2241. Correspondingly, a hole into which a hook is inserted may be arranged in the first sliding groove 2241. Accordingly, the door 2700 is fixed by the hook so as not to be separated from the first sliding groove 2241, and the battery 2100 may not be separated from the coupling space 2200i by the door 2700.

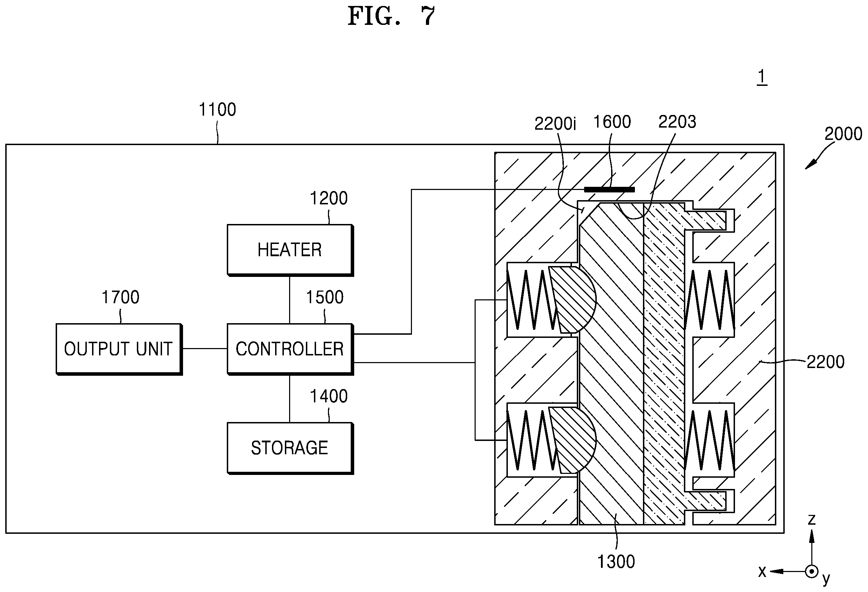

Hereinafter, with reference to FIG. 7, the function of the aerosol-generating device 1 that occurs when the battery 2100 is normally coupled to the coupling space 2200i will be described.

FIG. 7 is a cross-sectional view of an aerosol-generating device according to another embodiment of the present disclosure.

An aerosol-generating device 1 according to another embodiment may include a body 1100, a heater 1200, a storage 1400, a controller 1500, an insertion detection sensor 1600, an output unit 1700, and a battery coupling structure 2000.

The aerosol-generating device 1 and the battery coupling structure 2000 illustrated in FIG. 7 may be identical or similar to the aerosol-generating device of FIG. 2 and the battery coupling structure 2000 of FIG. 3, respectively, and duplicate descriptions thereof are omitted below.

The storage 1400 may store power supplied by the battery 1300 as electrical energy. That is, the storage 1400 is configured to supply reserve power to internal components of the aerosol-generating device 1 even when the battery 1300 is separated from the coupling space 2200i.

In this case, because the battery 1300 supplies power not only to the storage 1400 but also to other components, the electrical energy that may be stored in the storage 1400 may be small compared to the capacity of the battery 1300. Therefore, the component to which the storage 1400 may supply reserve power may be limited to the controller 1500, but the embodiment is not limited thereto. Meanwhile, the storage 1400 may be configured to be detachably coupled to the body 1100 like the battery 1300.

The controller 1500 may be configured to be electrically connected to the storage 1400 and the components of the aerosol-generating device 1 to control the components. The controller 1500 may be identical to or similar to the controller 12 of FIGS. 1A to 1C.

The insertion detection sensor 1600 may be configured to detect the insertion of the battery 1300 into the coupling space 2200i. The insertion detection sensor 1600 is arranged adjacent to a bottom surface 2203 of the coupling space 2200i and may be used to determine whether the battery 1300 is completely inserted into the coupling space 2200i. Even when the battery 1300 is separated from the coupling space 2200i, the insertion detection sensor 1600 may operate through the control of the controller 1500 based on the reserve power supplied from the storage 1400.

As an example, the insertion detection sensor 1600 may be an inductive sensor. An inductance-to-digital converter (LDC) sensor may refer to an inductive sensor. The controller 1500 may read, by using an inductive sensor, an inductance value that changes when the battery 1300 is accommodated in the coupling space 2200i.

The inductance value may vary depending on whether the battery 1300 is accommodated in the coupling space 2200i. For example, the inductance value may be changed by a metal material placed on the inside or outside of the battery 1300. In this case, the inductance value may vary depending on the type of the metal material. The controller 1500 may continuously read the inductance value in response to a change in the inductance value over time by using the inductive sensor.

The inductive sensor may generate a signal corresponding to the change in the inductance value of the coupling space 2200i. For example, when the inductance value satisfies a preset condition, the inductive sensor may generate a certain signal. The controller 1500 electrically connected to the inductive sensor may determine that the battery 1300 is accommodated up to the bottom surface 2203 of the coupling space 2200i based on the certain signal of the inductive sensor.

When the controller 1500 determines that the battery 1300 is accommodated up to the bottom surface 2203 of the coupling space 2200i, the controller 1500 may control the heater to heat the aerosol-generating article for smoking. This allows the preheating of the heater 1200 to start simply by the user inserting the battery 1300 into the coupling space 2200i of the body 1100 or the housing 2200 without any manipulation of the heater 1200 by the user.

Meanwhile, the insertion detection sensor 1600 is not limited to the inductive sensor. The insertion detection sensor 1600 may include various sensors, such as a capacitance sensor and an RGB sensor, which may identify whether the battery 1300 is fully accommodated in the coupling space 2200i.

The output unit 1700 is configured to inform the user whether the battery 1300 is inserted into the coupling space 2200i. For example, the output unit 1700 may be arranged in the form of an LCD or LED display on the outer surface of the body 1100. The output unit 1700 may be linked to the insertion detection sensor 1600 and/or the controller 1500 described above to inform the user that the battery 1300 is fully inserted into the coupling space 2200i.

According to a battery coupling structure and an aerosol-generating device including the battery coupling structure according to embodiments, a battery may be stably coupled to a housing simply by inserting the battery into the housing.

In addition, according to the battery coupling structure and the aerosol-generating device including the battery coupling structure according to embodiments, the heater may be operated simply by inserting the battery into the housing.

In addition, according to the battery coupling structure and the aerosol-generating device including the battery coupling structure according to embodiments, the user may determine whether the battery is fully inserted into the housing through an output unit.

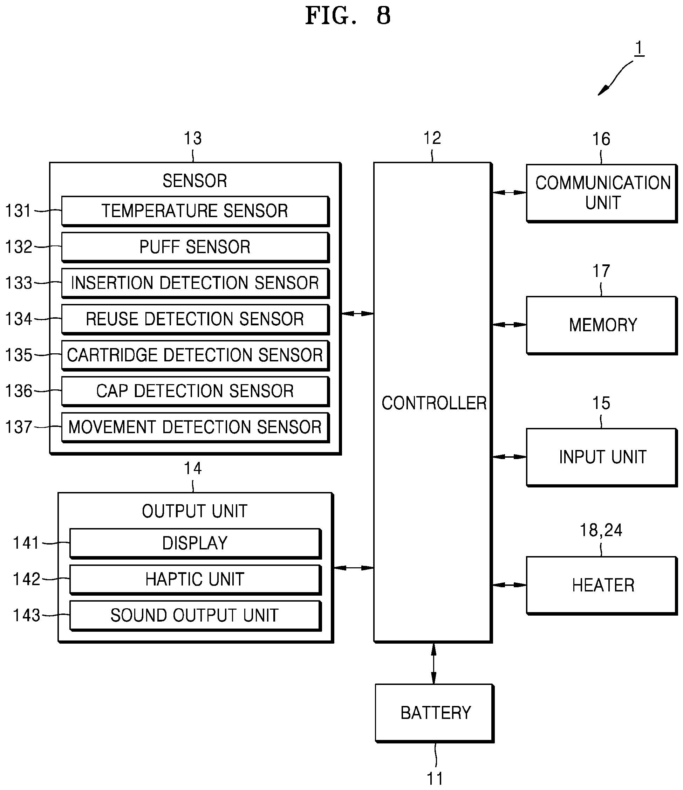

FIG. 8 is a block diagram of an aerosol-generating device according to an embodiment of the present disclosure.

An aerosol-generating device 1 may include a power source 11, a controller 12, a sensor 13, an output unit 14, an input unit 15, a communication unit 16, a memory 17, and one or more heaters 18 or 24. However, an internal structure of the aerosol-generating device 1 is not limited to the illustration of FIG. 8. That is, it may be understood by those skilled in the art that some of the components shown in FIG. 8 may be omitted or new components may be added, according to the design of the aerosol-generating device 1.

The sensor 13 may sense a state of the aerosol-generating device 1 or a state of the surroundings of the aerosol-generating device 1 and may transmit information corresponding to the sensed state to the controller 12. The controller 12 may control the aerosol-generating device 1 so that various functions, such as operation control of the cartridge heater 24 and/or the heater 18, smoking restrictions, determination as to whether the stick S and/or the cartridge 19 is inserted, and an alarm display, may be performed, based on the information corresponding to the sensed state.

The sensor 13 may include at least one of a temperature sensor 131, a puff sensor 132, an insertion detection sensor 133, a reuse detection sensor 134, a cartridge detection sensor 135, a cap detection sensor 136, and a movement detection sensor 137.

The temperature sensor 131 may detect a temperature at which the cartridge heater 24 and/or the heater 18 is heated. The aerosol-generating device 1 may include a separate temperature sensor for detecting the temperature of the cartridge heater 24 and/or the heater 18, or the cartridge heater 24 and/or the heater 18 may serve as a temperature sensor.

The temperature sensor 131 may output a signal corresponding to the cartridge heater 24 and/or the heater 18. For example, the temperature sensor 131 may include a resistor element of which resistance value changes according to a change in the temperature of the cartridge heater 24 and/or the heater 18. The temperature sensor 131 may be implemented by a thermistor, etc. which is an element using a property in which resistance changes according to a temperature. In this case, the temperature sensor 131 may output a signal corresponding to the resistance value of the resistor element as a signal corresponding to the temperature of the cartridge heater 24 and/or the heater 18. For example, the temperature sensor 131 may include a sensor for detecting the resistance value of the cartridge heater 24 and/or the heater 18. In this case, the temperature sensor 131 may output the signal corresponding to the resistance value of the cartridge heater 24 and/or the heater 18 as a signal corresponding to the temperature of the cartridge heater 24 and/or the heater 18.

The temperature sensor 131 may be disposed around the battery 11 to monitor a temperature of the battery 11. The temperature sensor 131 may be disposed adjacent to the battery 11. For example, the temperature sensor 131 may be attached to one surface of a power source, which is the battery 11. For example, the temperature sensor 131 may be mounted on one surface of a printed circuit board.

The temperature sensor 131 may be disposed inside the body 10 to detect an internal temperature of the body 10.

The puff sensor 132 may detect the user's puff, based on various physical changes in an airflow path. The puff sensor 132 may output a signal corresponding to the puff. For example, the puff sensor 132 may be a pressure sensor. The puff sensor 132 may output a signal corresponding to internal pressure of the aerosol-generating device. The internal pressure of the aerosol-generating device 1 may correspond to pressure of the airflow path on which gas flows. The puff sensor 132 may be disposed to correspond to the airflow path on which gas flows, in the aerosol-generating device 1.

The insertion detection sensor 133 may detect insertion and/or removal of the stick S. The insertion detection sensor 133 may detect signal changes relating to insertion and/or removal of the stick S. The insertion detection sensor 133 may be installed around an insertion space. The insertion detection sensor 133 may detect insertion and/or removal of the stick S according to changes in dielectric constants inside the insertion space. For example, the insertion detection sensor 133 may be an inductive sensor and/or a capacitance sensor.

The inductive sensor may include at least one coil. The coil of the inductive sensor may be disposed adjacent to the insertion space. For example, when a magnetic field changes around a coil through which a current flows, the characteristics of the current flowing through the coil may be changed according to the Faraday's law. The characteristics of the current flowing through the coil may include a frequency of an alternating current, a current value, a voltage value, an inductance value, an impedance value, etc.

The inductive sensor may output signals corresponding to the characteristics of the current flowing through the coil. For example, the inductive sensor may output signals corresponding to the inductance value of the coil.

The capacitance sensor may include a conductor. The conductor of the capacitance sensor may be disposed adjacent to the insertion space. The capacitance sensor may output a signal corresponding to an electromagnetic characteristic of the surroundings, for example, an electrostatic capacitance around the conductor. For example, when the stick S including a wrapper made of a metal material is inserted into the insertion space, the electromagnetic properties around the conductor may be changed by the wrapper of the stick S.

The reuse detection sensor 134 may detect whether the stick S is reused. The reuse detection sensor 134 may be a color sensor. The color sensor may detect a color of the stick S. The color sensor may detect a color of a portion of the wrapper surrounding the outside of the stick S. The color sensor may detect values for optical characteristics corresponding to the color of an object, based on light reflected by the object. For example, the optical characteristics may be a wavelength of the light. The color sensor may be implemented as a single component with the proximity sensor, or may be implemented as a separate component distinct from the proximity sensor.

A color of at least a portion of the wrapper that constitutes the stick S may be changed by aerosol. In case where the stick S is inserted into the insertion space, the reuse detection sensor 134 may be disposed to correspond to a location in which at least a portion of the wrapper of which color is changed by aerosol. For example, before the stick S is used by the user, the color of at least the portion of the wrapper may be a first color. In this case, as at least a portion of the wrapper is wet by aerosol generated by the aerosol-generating device 1 while the aerosol is passing through the stick S, the color of the at least a portion of the wrapper may be changed to a second color. The color of the at least a portion of the wrapper may be maintained as the second color after being changed from the first color to the second color.

The cartridge detection sensor 135 may detect insertion and/or removal of the cartridge 19. The cartridge detection sensor 135 may be implemented by an inductance-based sensor, a capacitive sensor, a resistance sensor, a hall sensor (hall IC) using a hall effect, etc.

The cap detection sensor 136 may detect mounting and/or removal of a cap. When the cap is separated from the body 10, a portion of the cartridge 19 and the body 10 covered by the cap may be exposed to the outside. The cap detection sensor 136 may be implemented by a contact sensor, a hall sensor (hall IC), an optical sensor, etc.

The movement detection sensor 137 may detect a movement of the aerosol-generating device. The movement detection sensor 137 may be implemented with at least one of an acceleration sensor and a gyro sensor.

The sensor 13 may further include at least one of a humidity sensor, a barometric pressure sensor, a magnetic sensor, a global positioning sensor (GPS), and a proximity sensor, in addition to the above-described sensors 131 through 137. Functions of the sensors would be instinctively understood by one of ordinary skill in the art in view of their names and thus detailed descriptions thereof will be omitted herein.

The output unit (output interface) 14 may output information about the state of the aerosol-generating device 1 and may provide the information to the user. The output unit 14 may include at least one of a display 141, a haptic unit 142, and a sound output unit 143, but embodiments are not limited thereto. When the display 141 forms a layer structure together with a touch pad to construct a touch screen, the display 141 may be used as an input device as well as an output device.

The display 141 may visually provide information about the aerosol-generating device 1 to the user. For example, the information about the aerosol-generating device 1 may refer to various pieces of information, such as the charging/discharging state of the battery 11 of the aerosol-generating device 1, a preheating state of the heater 18, an insertion/removal state of the stick S and/or the cartridge 19, a mounting/removal state of the cap, or a state in which use of the aerosol-generating device 1 is limited (e.g., detection of an abnormal article), and the display 141 may output the information to the outside. For example, the display 141 may have a shape of a light-emitting diode (LED). For example, the display 141 may be a liquid crystal display (LCD), an organic light-emitting display (OLED) panel, or the like.

The haptic unit 142 may convert an electrical signal into a mechanical stimulus or electrical stimulus and may tactually provide information about the aerosol-generating device 1 to the user. For example, when initial power is supplied to the cartridge heater 24 and/or the heater 18 for a set time, the haptic unit 142 may generate vibration corresponding to completion of initial preheating. The haptic unit 142 may include a motor, a piezoelectric element, and/or an electrical stimulation device.

The sound output unit 143 may acoustically provide the information about the aerosol-generating device 1 to the user. For example, the sound output unit 143 may convert the electrical signal into a sound signal and may output the sound signal to the outside.

The battery 11 may supply power used to operate the aerosol-generating device 1. The battery 11 may supply power so that the cartridge heater 24 and/or the heater 18 may be heated. In addition, the battery 11 may supply power required for operations of the sensor 13, the output unit 14, the input unit 15, the communication unit 16, and the memory 17, which are other components provided in the aerosol-generating device 1. The battery 11 may be a rechargeable power source or a disposable power source. For example, the battery 11 may be a lithium polymer (LiPoly) battery, but embodiments are not limited thereto.

The battery 11 may be a removable type (detachable or separable) power source. The battery 11 includes an electrical contact portion, and when the battery 11 is mounted in the aerosol-generating device 1, the electrical contact portion of the battery 11 may be implemented to be electrically connected to an electrical contact portion provided in the aerosol-generating device 1 to supply power to the aerosol-generating device 1. As another example, the battery 11 may include a charging coil for supplying power to the aerosol-generating device 1 in a wireless charging manner instead of a separate electrical contact portion. That is, the power supply method of the battery 11 may vary, and the electrical connection method of the battery 11 and the aerosol-generating device 1 may vary depending on the power supply method supported by the battery 11.

The detachable battery 11 may include a charger interface that may be connected to an external charger. Power for charging the detachable battery 11 may be provided to the battery 11 through the charger interface. The battery 11 may be charged by the external charger while being coupled to the aerosol-generating device 1 or while being separated from the aerosol-generating device 1.

Although not shown in FIG. 8, the aerosol-generating device 1 may further include a battery protection circuit. The battery protection circuit may be electrically connected to the battery 11 and may include a switching element.

The battery protection circuit may cut off an electric path for the battery 11 according to certain conditions. For example, when a voltage level of the battery 11 is greater than or equal to a first voltage corresponding to overcharging, the battery protection circuit may cut off the electric path for the battery 11. For example, when a voltage level of the battery 11 is less than a second voltage corresponding to overdischarging, the battery protection circuit may cut off the electric path for the battery 11.

The heater 18 may heat a medium or an aerosol-generating material in the stick S by receiving power from the battery 11. Although not shown in FIG. 8, the aerosol-generating device 1 may further include a power conversion circuit (e.g., a DC/DC converter) for converting power of the battery 11 to supply the converted power to the cartridge heater 24 and/or the heater 18. In addition, when the aerosol-generating device 1 generates aerosol by using an induction heating method, the aerosol-generating device 1 may further include a DC/AC converter that converts direct current power of the battery 11 into alternating current power.

The controller 12, the sensor 13, the output unit 14, the input unit 15, the communication unit 16, and the memory 17 may perform functions by receiving power from the battery 11. Although not shown in FIG. 8, the aerosol-generating device 1 may further include a power conversion circuit for converting the power of the battery 11 to supply the converted power to components, for example, a low dropout (LDO) circuit or a voltage regulator circuit. Although not shown in FIG. 8, a noise filter may be provided between the battery 11 and the heater 18. The noise filter may be a low pass filter. The low pass filter may include at least one inductor and a capacitor. A cutoff frequency of the low pass filter may correspond to a frequency of a radio frequency switching current applied from the battery 11 to the heater 18. Radio frequency noise components may be prevented from being applied to the sensor 13, such as the insertion detection sensor 133, by the low pass filter.

According to an embodiment, the cartridge heater 24 and/or the heater 18 may be formed of an arbitrary proper electric resistance material. For example, the proper electric resistance material may be metal or metal alloy including titanium, zirconium, tantalum, platinum, nickel, cobalt, chromium, hafnium, niobium, molybdenum, tungsten, tin, gallium, manganese, iron, copper, stainless steel, nichrome, etc., but embodiments are not limited thereto. Also, the heater 18 may be implemented using a metal heating wire, a metal heating plate on which an electric conductive track is disposed, a ceramic heating body, or the like, but embodiments are not limited thereto.

According to another embodiment, the heater 18 may be a heater using an induction heating method. For example, the heater 18 may include a susceptor that generates heat by a magnetic field applied by the coil and heats the aerosol-generating material.

The input unit (input interface) 15 may receive information input from the user or may output the information to the user. For example, the input unit 15 may be a touch panel. The touch panel may include at least one touch sensor that detects touch. For example, the touch sensor may include a capacitive touch sensor, a resistive touch sensor, a surface acoustic wave touch sensor, an infrared touch sensor, or the like, but embodiments are not limited thereto.

The display 141 and the touch panel may be implemented as one panel. For example, the touch panel may be inserted (on-cell type or in-cell type) into the display 141. For example, the touch panel may be added on (add-on type) the display panel.

The input unit 15 may include a button, a key pad, a dome switch, a jog wheel, a jog switch, or the like, but embodiments are not limited thereto.

The memory 17 is hardware for storing various kinds of data processed in the aerosol-generating device 1, and may store pieces of data that have been processed and are to be processed by the controller 12. The memory 17 may include at least one type of storage medium selected from among a flash memory type, a hard disk type, a multimedia card micro type, a card type memory (for example, a secure digital (SD) or extreme digital (XD) memory), a random access memory (RAM), a static random access memory (SRAM), a read-only memory (ROM), an electrically erasable programmable ROM (EEPROM), a programmable ROM (PROM), magnetic memory, a magnetic disk, and an optical disk. The memory 17 may store data about the operating time of the aerosol-generating device 1, a maximum number of puffs, a current number of puffs, at least one temperature profile, and the user's smoking pattern.

The communication unit (communication interface, communicator) 16 may include at least one component for communication with other electronic devices. For example, the communication unit 16 may include at least one of a short-range wireless communication unit and a wireless communication unit.

Examples of the short-range wireless communication unit may include, but are not limited to, a Bluetooth communication unit, a Bluetooth Low Energy (BLE) communication unit, a near field communication (NFC) unit, a wireless local area network (WLAN) (e.g., Wi-Fi) communication unit, a ZigBee communication unit, an infrared Data Association (IrDA) communication unit, a Wi-Fi direct (WFD) communication unit, an ultra wideband (UWB) communication unit, and an Ant+ communication unit.

The wireless communication unit may include a cellular network communication unit, an Internet communication unit, a computer network (e.g., a LAN or a WAN) communication unit, or the like, but embodiments are not limited thereto.

Although not shown in FIG. 8, the aerosol-generating device 1 may further include a connection interface, such as a universal serial bus (USB) interface, and may transmit/receive information by being connected to another external device through the connection interface, such as a USB interface, or may charge the battery 11.

The controller 12 may control overall operations of the aerosol-generating device 1. According to an embodiment, the controller 12 may include at least one processor. The processor may be implemented by an array of a plurality of logic gates, or may be implemented by a combination of a general-use microprocessor and a memory in which a program executable by the general-use microprocessor is stored. It will also be understood by one of ordinary skill in the art to which the present embodiment pertains that the processor may be implemented by other types of hardware.

The controller 12 may control supplying of the power of the battery 11 to the heater 18, thereby controlling the temperature of the heater 18. The controller 12 may control the temperature of the cartridge heater 24 and/or the heater 18, based on the temperature of the cartridge heater 24 and/or the heater 18 sensed by the temperature sensor 131. The controller 12 may control power supplied to the cartridge heater 24 and/or the heater 18, based on the temperature of the cartridge heater 24 and/or the heater 18. For example, the controller 12 may determine a target temperature of the cartridge heater 24 and/or the heater 18, based on a temperature profile stored in the memory 17.

The aerosol-generating device 1 may include a power supply circuit (not shown) electrically connected to the battery 11 between the battery 11 and the cartridge heater 24 and/or the heater 18. The power supply circuit may be electrically connected to the cartridge heater 24, the heater 18, or an induction coil 181. The power supply circuit may include at least one switching element. The switching element may be implemented by a bipolar junction transistor (BJT), a field effect transistor (FET), or the like. The controller 12 may control the power supply circuit.

The controller 12 may control switching of the switching element of the power supply circuit, thereby controlling the supply of power. The power supply circuit may be an inverter that converts direct current power output by the battery 11 into alternating current power. For example, the inverter may include a full-bridge circuit or half-bridge circuit including a plurality of switching elements.

The controller 12 may turn on the switching element so that power may be supplied from the battery 11 to the cartridge heater 24 and/or the heater 18. The controller 12 may turn off the switching element so that the supply of power to the cartridge heater 24 and/or the heater 18 may be cut off. The controller 12 may adjust a current supplied by the battery 11 by adjusting a frequency and/or duty ratio of a current pulse input to the switching element.

The controller 12 may control a voltage output by the battery 11 by controlling switching of the switching element of the power supply circuit. The power conversion circuit may convert the voltage output by the battery 11. For example, the power conversion circuit may include a Buck-converter that drops the voltage output by the battery 11. For example, the power conversion circuit may be implemented through a Buck-boost converter, a Zener diode, etc.

The controller 12 may adjust the level of the voltage output by the power conversion circuit by controlling an on/off operation of the switching element included in the power conversion circuit. When an on state of the switching element is continued, the level of the voltage output by the power conversion circuit may correspond to the level of the voltage output by the battery 11. A duty ratio with respect to the on/off operation of the switching element may correspond to a ratio of the voltage output by the power conversion circuit to the voltage output by the battery 11. As the duty ratio with respect to the on/off operation of the switching element is decreased, the level of the voltage output by the power conversion circuit may be reduced. The heater 18 may be heated based on the voltage output by the power conversion circuit.

The controller 12 may control power to be supplied to the heater 18, by using at least one method of a pulse width modulation (PWM) method and a proportional-integral-differential (PID) method.

For example, the controller 12 may control supply of a current pulse having a certain frequency and a duty ratio, by using the PWM method. The controller 12 may control power supplied to the heater 18 by adjusting the frequency and duty ratio of the current pulse.

For example, the controller 12 may determine a target temperature that is a target of control, based on the temperature profile. The controller 12 may control the power supplied to the heater 18 by using a PID method, which is a feedback control method using a difference value between the temperature of the heater 18 and the target temperature thereof, a value obtained by integrating the difference value according to the flow of time, and a value obtained by differentiating the difference value according to the flow of time.

The controller 12 may prevent the cartridge heater 24 and/or the heater 18 from being overheated. For example, the controller 12 may control an operation of the power conversion circuit so that the supply of the power to the cartridge heater 24 and/or the heater 18 is stopped, based on the temperature of the cartridge heater 24 and/or the heater 18 exceeding a preset limit temperature. For example, the controller 12 may reduce the amount of power supplied to the cartridge heater 24 and/or the heater 18, based on the temperature of the cartridge heater 24 and/or the heater 18 exceeding the preset limit temperature. For example, the controller 12 may determine that the aerosol-generating material accommodated in the cartridge 19 is exhausted, based on the temperature of the cartridge heater 24 exceeding the limit temperature, and may cut off the supply of power to the cartridge heater 24.

The controller 12 may control charging/discharging of the battery 11. The controller 12 may check the temperature of the battery 11, based on an output signal of the temperature sensor 131.

When a power wire is connected to a battery terminal of the aerosol-generating device 1, the controller 12 may check whether the temperature of the battery 11 is greater than or equal to a first limit temperature that is a basis for blocking charging of the battery 11. When the temperature of the battery 11 is less than the first limit temperature, the controller 12 may control the battery 11 to be charged, based on a preset charging current. When the temperature of the battery 11 is equal to or greater than the first limit temperature, the controller 12 may block charging of the battery 11.

When power of the aerosol-generating device 1 is in an on state, the controller 12 may check whether the temperature of the battery 11 is greater than or equal to a second limit temperature that is a basis for cutting off discharging of the battery 11. When the temperature of the battery 11 is less than the second limit temperature, the controller 12 may control the power stored in the battery 11 to be used. When the temperature of the battery 11 is greater than or equal to the second limit temperature, the controller 12 may stop using the power stored in the battery 11.

The controller 12 may calculate the remaining capacity of the power stored in the battery 11. For example, the controller 12 may calculate the remaining capacity of the battery 11, based on a voltage and/or current sensing value of the battery 11.

The controller 12 may determine whether the stick S is inserted into the insertion space, through the insertion detection sensor 133. The controller 12 may determine that the stick S is inserted, based on an output signal of the insertion detection sensor 133. When it is determined that the stick S is inserted into the insertion space, the controller 12 may control power to be supplied to the cartridge heater 24 and/or the heater 18. For example, the controller 12 may supply power to the cartridge heater 24 and/or the heater 18, based on the temperature profile stored in the memory 17.

The controller 12 may determine whether the stick S is removed from the insertion space. For example, the controller 12 may determine whether the stick S is removed from the insertion space, through the insertion detection sensor 133. For example, when the temperature of the heater 18 is greater than or equal to the limit temperature or when a temperature change slope of the heater 18 is equal to or greater than a set slope, the controller 12 may determine that the stick S is removed from the insertion space. When it is determined that the stick S has been removed from the insertion space, the controller 12 may block supply of power to the cartridge heater 24 and/or the heater 18.

The controller 12 may control a power supply time and/or a power supply amount for the heater 18 according to the state of the stick S detected by the sensor 13. The controller 12 may check a level range in which the level of a signal of a capacitance sensor is included, based on a lookup table. The controller 12 may check a moisture amount for the stick S according to the checked level range.

When the stick S is in an overwatering state, the controller 12 may control the power supply time for the heater 18 to thereby increase the preheating time of the stick S rather than when the stick S is in a general state.

The controller 12 may determine whether the stick S inserted into the insertion space is reused, through the reuse detection sensor 134. For example, the controller 12 may compare a sensing value of a signal of the reuse detection sensor with a first reference range in which a first color is included, and may determine that the stick S is not used when the sensing value is included in the first reference range. For example, the controller 12 may compare the sensing value of the signal of the reuse detection sensor with a second reference range in which a second color is included, and may determine that the stick S is used when the sensing value is included in the second reference range. When it is determined that the stick S is used, the controller 12 may block supply of power to the cartridge heater 24 and/or the heater 18.

The controller 12 may determine whether the cartridge 19 is combined and/or removed, through the cartridge detection sensor 135. For example, the controller 12 may determine whether the cartridge 19 is combined or removed, based on the sensing value of a signal of the cartridge detection sensor.

The controller 12 may determine whether the aerosol-generating material of the cartridge 19 is exhausted. For example, the controller 12 may preheat the cartridge heater 24 and/or the heater 18 by applying power, may determine whether the temperature of the cartridge heater 24 exceeds the limit temperature in a preheating section, and, when the temperature of the cartridge heater 24 exceeds the limit temperature, may determine that the aerosol-generating material of the cartridge 19 is exhausted. When it is determined that the aerosol-generating material of the cartridge 19 is exhausted, the controller 12 may cut off the supply of power to the cartridge heater 24 and/or the heater 18.

The controller 12 may determine whether use of the cartridge 19 is possible. For example, the controller 12 may determine that the use of the cartridge 19 is not possible if a current puff frequency is greater than or equal to a maximum puff frequency set in the cartridge 19, based on data stored in the memory 17. For example, when a total time period during which the heater 24 is heated is greater than or equal to a preset maximum time period or a total amount of power supplied to the cartridge heater 24 is greater than or equal to a preset maximum power amount, the controller 12 may determine that the use of the cartridge 19 is not possible.

The controller 12 may perform determination on the user's inhaling through the puff sensor 132. For example, the controller 12 may determine whether a puff occurs, based on a sensing value of a signal of the puff sensor. For example, the controller 12 may determine the intensity of the puff, based on the sensing value of the signal of the puff sensor 132. When the puff frequency reaches the preset maximum puff frequency or puffs are not sensed for a preset time period or more, the controller 12 may cut off the supply of power to the cartridge heater 24 and/or the heater 18.

The controller 12 may determine whether the cap is combined and/or removed, through the cap detection sensor 136. For example, the controller 12 may determine whether the cap is combined or removed, based on a sensing value of a signal of the cartridge detection sensor.

The controller 12 may control the output unit 14, based on a result of the sensing performed by the sensor 13 For example, when the number of puffs counted by the puff sensor 132 reaches a preset number, the controller 12 may notify the user in advance that the aerosol-generating device 1 is ended soon, through at least one of the display 141, the haptic unit 142, and the sound output unit 143. For example, the controller 12 may notify the user through the output unit 14, based on a determination that the stick S is not present in the insertion space. For example, the controller 12 may notify the user through the output unit 14, based on a determination that the cartridge 19 and/or the cap is not mounted. For example, the controller 12 may transmit information about the temperature of the cartridge heater 24 and/or the heater 18 to the user through the output unit 14.

The controller 12 may store and update a history of an event occurred in the memory 17, based on certain event occurrence. The event may include insertion detection of the stick S, heating start of the stick S, puff detection, puff end, overheat detection of the cartridge heater 24 and/or the heater 18, detection of overvoltage application to the cartridge heater 24 and/or the heater 18, heating end of the stick S, an operation such as power on/off of the aerosol-generating device 1, charging start of the battery 11, detection of overcharging of the battery 11, and charging end of the battery 11, which are performed by the aerosol-generating device 1. The history of the event may include, for example, a date and time of the event, log data corresponding to the event. For example, when a predetermined event is insertion detection of the stick S, log data corresponding to the event may include data for the sensing value, etc. of the insertion detection sensor 133. For example, when the predetermined event is overheating detection of the cartridge heater 24 and/or the heater 18, the log data corresponding to the event may include data about, for example, the temperature of the cartridge heater 24 and/or heater 18, the voltage applied to the cartridge heater 24 and/or the heater 18, and a current flowing through the cartridge heater 24 and/or the heater 18.

The controller 12 may control a communication link to be formed with an external device, such as the user's mobile terminal. When receiving data on authentication from an external device through the communication link, the controller 12 may remove limitation of the use of at least one function of the aerosol-generating device 1. The data on authentication may include data indicating completion of user authentication with respect to a user corresponding to the external device. The user may perform user authentication through the external device. The external device may determine whether user data is valid, based on the user's birthday and a unique number representing the user, and may receive data about use authority of the aerosol-generating device 1 from an external server. The external device may transmit data indicating the completion of the user authentication to the aerosol-generating device 1, based on the data about the use authority. When the user authentication is completed, the controller 12 may remove limitation of the use of the at least one function of the aerosol-generating device 1. For example, when the user authentication is completed, the controller 12 may_remove the limitation of the use of a heating function of supplying power to the heater 18.

The controller 12 may transmit data on the state of the aerosol-generating device 1 to the external device through the communication link formed with the external device. Based on the received state data, the external device may output the remaining capacity, the operation mode, etc. of the battery 11 of the aerosol-generating device 1 through a display of the external device.

The external device may transmit a position search request to the aerosol-generating device 1, based on an input of starting a position search of the aerosol-generating device 1. When receiving a position search request from the external device, the controller 12 may control at least one of output devices to perform an operation corresponding to a position search, based on the received position search request. For example, the haptic unit 142 may generate vibration in response to the position search request. For example, in response to the position search request, the display 141 may output an object that corresponds to position search and search end.

The controller 12 may control firmware update to be performed, when receiving firmware data from the external device. The external device may check a current version of the firmware of the aerosol-generating device 1 and determine whether a new version of the firmware is present. When receiving an input of requesting for firmware download, the external device may receive the new version of the firmware data and transmit the new version of the firmware data to the aerosol-generating device 1. As the controller 12 receives the new version of the firmware data, the controller 12 may control the firmware update of the aerosol-generating device 1 to be performed.

The controller 12 may transmit data on a sensing value of the at least one sensor 13 to an external server (not shown) through the communication unit 16, and may receive and store a learning model generated by learning sensing values from a server through machine learning, such as deep learning. The controller 12 may perform, for example, an operation of determining the user's inhaling pattern and an operation of generating a temperature profile, by using the learning model received from the server. The controller 12 may store, for example, sensing value data of the at least one sensor 13 and data for training an artificial neural network (ANN) in the memory 17. For example, the memory 17 may store a database for each component provided in the aerosol-generating device 1, a weight that forms an ANN structure, and biases, which are for training the ANN. The controller 12 may learn data on a sensing value of at least one sensor 13, the user's inhaling pattern, the temperature profile, etc. stored in the memory 17, and may generate at least one learning model used for, for example, determination of the user's inhaling pattern, generation of the temperature profile.

Certain embodiments or other embodiments of the present disclosure described above are not exclusive or distinct from each other. The certain embodiments or other embodiments of the present disclosure described above may be combined with each other or used in combination with each other in their respective components or functions.

For example, it means that an A component described in a specific embodiment and/or the drawings and a B component described in another embodiment and/or the drawings may be combined with each other. In other words, even when it is not explained directly about combination between components, it is possible to combine unless it is explained that combination is impossible.

The above detailed description should not be interpreted restrictedly but should be considered illustrative in all aspects. The scope of the present disclosure should be determined by a rational interpretation of the attached claims, and all changes within the equivalent scope of the present disclosure are included in the scope of the present disclosure.

## Claims

1. A battery coupling structure comprising:
a battery for supplying power;
a housing including a coupling space for accommodating the battery;
a plurality of receiving terminals inserted into a portion of the housing to receive power from the battery;
a pressing member for pressing the battery accommodated in the coupling space to contact each of the plurality of receiving terminals; and
an elastic member for supporting the pressing member and moving the pressing member in a direction crossing an insertion direction of the battery,
wherein the plurality of receiving terminals sequentially contact the battery during insertion of the battery into the coupling space.

2. The battery coupling structure of claim 1, wherein the receiving terminal includes a contact portion having at least a portion convexly protruding into the coupling space and an elastic member supporting the contact portion.

3. The battery coupling structure of claim 1, wherein the battery includes a supply terminal contacting the receiving terminal,
wherein the supply terminal is arranged in a concave portion in the direction crossing the insertion direction of the battery on one surface of the battery.

4. The battery coupling structure of claim 1, wherein the housing further includes a first surface on which the plurality of receiving terminals are arranged and a second surface facing the first surface,
wherein the second surface includes an accommodation groove for accommodating the elastic member.

5. The battery coupling structure of claim 1, wherein the pressing member includes a guide portion protruding in the direction crossing the insertion direction of the battery,
wherein the housing further includes a guide groove for accommodating the guide portion and guiding a movement of the pressing member.

6. The battery coupling structure of claim 1, wherein the battery includes an inclined surface that contacts the receiving terminal while the battery is inserted into the coupling space.

7. The battery coupling structure of claim 1, further comprising a first magnetic member arranged around the receiving terminal so that the battery is coupled to the housing in a direction in which the pressing member presses the battery.

8. The battery coupling structure of claim 7, further comprising a second magnetic member arranged on the pressing member to prevent the battery from separating from the coupling space,
wherein the first magnetic member and the second magnetic member are aligned in the direction crossing the insertion direction of the battery.

9. The battery coupling structure of claim 1, wherein the battery includes a protrusion at one end of the battery for separation of the battery, and the housing further includes a separation groove for accommodating the protrusion.

10. The battery coupling structure of claim 9, further comprising a third magnetic member arranged in the separation groove so that the protrusion is coupled to the separation groove.

11. The battery coupling structure of claim 1, further comprising a door that slides to open and close the coupling space,
wherein the housing further includes a sliding groove for accommodating at least a portion of the door.

12. An aerosol-generating device comprising:
the battery coupling structure of claim 1;
a body including an accommodation space for accommodating an aerosol-generating article; and
a heater for generating the aerosol-generating article accommodated in the accommodation space,
wherein the housing of the battery coupling structure is a portion of the body.

13. The aerosol-generating device of claim 12, further comprising:
a storage for storing power supplied by the battery as electrical energy; and
a controller electrically connected to the storage and components of the aerosol-generating device and configured to control the components.

14. The aerosol-generating device of claim 13, further comprising an insertion detection sensor for detecting insertion of the battery into the coupling space,
wherein the controller is further configured to control the heater based on a signal generated by the insertion detection sensor.

15. The aerosol-generating device of claim 12, further comprising an output
unit for transmitting to a user whether the battery has been inserted into the coupling space.
